# EUROPEAN PATENT SPECIFICATION

(11) **EP 2 368 363 B1**
(45) Date of publication and mention of the grant of the patent: **20.06.2018**
(21) Application number: 09835221.4
(22) Date of filing: 17.12.2009
(51) Int. Cl.: H04N 7/12, H04N 7/015, H04N 21/236, H04N 21/434, H04H 60/06, H04H 20/10

(54) **URGENT PACKET TRANSMISSION/RECEPTION APPARATUS AND METHOD FOR DIGITAL BROADCAST SYSTEM**
VORRICHTUNG UND VERFAHREN ZUM ÜBERTRAGEN UND EMPFANGEN ZEITKRITISCHER PAKETE FÜR EIN DIGITALES RUNDFUNKSYSTEM
APPAREIL ET PROCÉDÉ D'ÉMISSION/RÉCEPTION DE PAQUET URGENT POUR UN SYSTÈME DE DIFFUSION GÉNÉRALE NUMÉRIQUE

(30) Priority: 23.12.2008 KR 20080132215
(43) Date of publication of application: 28.09.2011
(73) Proprietor: Samsung Electronics Co., Ltd., Suwon-si, Gyeonggi-do, 443-742 (KR)
(72) Inventor: LEE, Hak Ju, Gyeonggi-do (KR); LIM, Yeon Ju, Gyeonggi-do (KR); YUN, Sung Ryul, Gyeonggi-do (KR); KIM, Jae Yoel, Gyeonggi-do (KR); MYUNG, Se Ho, Gyeonggi-do (KR)
(74) Representative: Nederlandsch Octrooibureau
(86) International application number: PCT/KR2009/007568
(87) International publication number: WO 2010/074455

(56) References cited:
- EP-A2- 1 850 547
- WO-A1-01/26326
- JP-A- 5 300 153
- JP-A- 2007 088 709
- KR-B1- 100 785 472
- US-A1- 2004 131 014

## Description

The present invention relates to a digital broadcast system and, in particular to an apparatus and method for transmitting/receiving an urgent packet in a digital broadcast system

Digital Video Broadcasting-Terrestrial (DVB-T) is a European standard for the broadcast transmission of digital terrestrial television using Orthogonal Frequency Division Multiplexing (OFDM) modulation. OFDM has also been adopted in the DVB-C2 as a second generation of a DVB-Cable (DVB-C) transmission system.

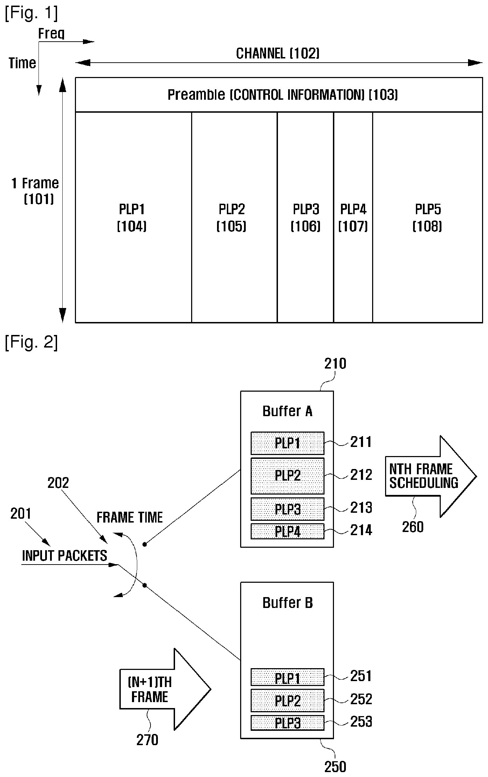

FIG. 1 is a diagram illustrating a frame structure of DVB-C2 system based on OFDM.

As shown in FIG. 1, a frequency channel 102 is composed of a plurality of individual normal broadcast service packets referred to as Physical Layer Pipes (PLPs) 104 to 108. A frame 101 includes a plurality normal broadcast service packets 104 to 108 and a preamble 103 containing scheduling and control information for the service packets 104 to 108. The preamble 103 carries the control information on channel 102, and thus a receiver detects one or more preamble symbols and locates the normal broadcast packets in the frame based on the control information extracted from the preamble symbols and demodulates target broadcast symbols.

In FIG. 1, the number of broadcast packets to be carried by the frame is determined depending on the length and bandwidth of the frame. In order for the transmitter to perform scheduling, the preset number of broadcast packets to be carried by a frame should be buffered.

FIG. 2 is a diagram illustrating a principle of buffering the broadcast packets to be carried by a frame in a broadcast system.

Referring to FIG. 2, the transmitter includes two buffers 210 and 250 to alternately buffer and schedule the broadcast packets. That is, if an input packet 201 is received from the network, the transmitter starts accumulating the input packet 201 in buffer A 210. The input packet can be a set of normal PLPs 211 to 214. If the length of the packet accumulated in buffer A 210 reaches a length equal to the number of broadcast backs allowed in a single frame, the transmitter switches the buffering path to buffer B 250. The next input packet is buffered in buffer B 250 as denoted by reference numeral 270. While the next packet is buffered in buffer B 250, the previous packet buffered in buffer A 210 is output to a scheduler to be scheduled.

US 2004/131014 A1 discloses a frame header that may include a field for frame number, time stamp, time zone offset, region definition, and table-of-contents locations definition.

This packet transmission method is used in the conventional broadcast system for transmitting broadcast data in a fixed-size frame. In such a broadcast system, the broadcast data is stored for forming a frame before transmission and then scheduled in the next frame, creating a transmission delay at least as long as a frame length. Accordingly, such transmission method is not appropriate for delay-constrained services such as emergency broadcast and game services. That is, the conventional DVB-C2 broadcast system performs scheduling of the input packet through buffering such that the packet waits for the next frame to be scheduled, resulting in a transmission delay. Especially when the input packet carries delay-constrained data such as a disaster broadcast service data or a real time game service data, the transmission delay may cause significant problems.

The invention is defined in the independent claims. The dependent claims define advantageous embodiments.

In order to solve at least the above problems in the prior art, the present invention provides a method for effectively delivering an urgent packet in a frame-based broadcast system. Also, the present invention provides a method for inserting urgent packet information into an urgent packet header in the frame in order for a receiver to locate the urgent packet in the frame.

For example, a packet transmission apparatus of a digital broadcast transmitter includes a buffer which buffers broadcast packets; an urgent packet generator which generates an urgent packet having an urgent packet header indicating the urgent packet when a packet containing urgent data is detected; and a frame generator which generates a frame with the broadcast packets and inserts the urgent packet into the frame, wherein the urgent packet is substituted for one of the broadcast packets in the frame.

For example, a packet transmission method of a digital broadcast transmitter includes analyzing input packets; inserting, when a packet carrying urgent data is detected among the broadcast packets, an urgent packet header in front of the packet carrying the urgent data to generate an urgent packet; buffering the broadcast packets except for the urgent packet; forming a frame with the broadcast packets and the urgent packet; and transmitting the frame.

For example, a digital broadcast system includes a transmitter which forms a broadcast frame including a preamble, broadcast packets, and an urgent packet having an urgent packet header, and transmits the frame; and a receiver which receives the broadcast frame transmitted by the transmitter, discriminates the urgent packet from the broadcast packets, and processes the broadcast packets and the urgent packet respectively.

For example, a packet communication method for a digital broadcast system includes transmitting, at a transmitter, a broadcast frame generated by forming a preamble and a plurality of broadcast packets and inserting at least one urgent packet having an urgent packet header into the broadcast frame; and processing, at a receiver, the broadcast packets and the at least one urgent packet separately extracted from the broadcast frame by detecting the urgent packet header within broadcast frame and referencing the urgent packet header.

The urgent packet transmission/reception apparatus and method for a digital broadcast system according to the present invention is advantageous in that it can immediately deliver the urgent packet carrying the delay-constrained data such as disaster broadcast data and emergency broadcast data.

The above and other objects, features and advantages of the present invention will be more apparent from the following detailed description in conjunction with the accompanying drawings, in which:
FIG. 1 is a diagram illustrating a frame structure of a DVB-C2 system based on OFDM;
FIG. 2 is a diagram illustrating a principle of buffering the broadcast packets to be carried by a frame in a broadcast system;

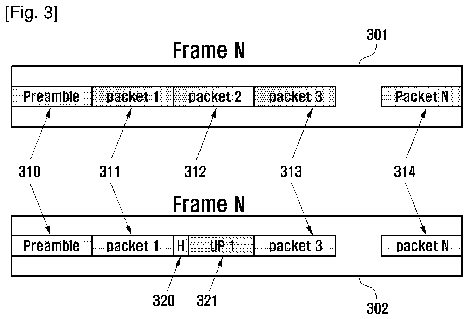

FIG. 3 is a diagram illustrating a frame structure for use in an urgent packet transmission method according to an embodiment of the present invention;

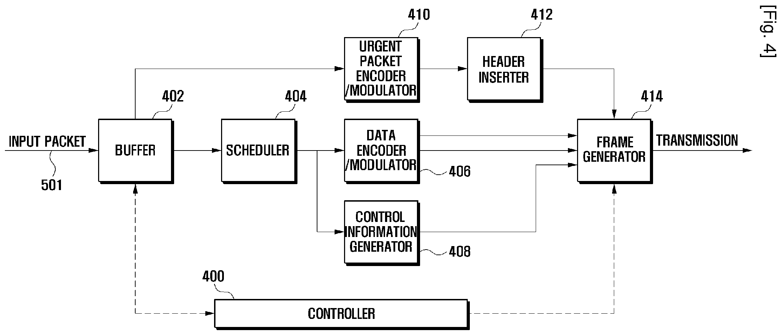

FIG. 4 is a block diagram illustrating a configuration of a digital broadcast transmitter for supporting an urgent packet transmission in a broadcast system according to an embodiment of the present invention;

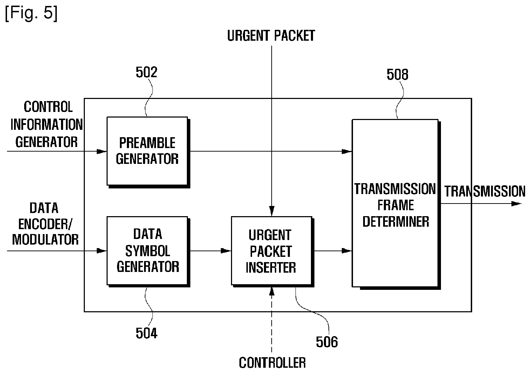

FIG. 5 is a block diagram illustrating a configuration of the frame generator of FIG. 4;

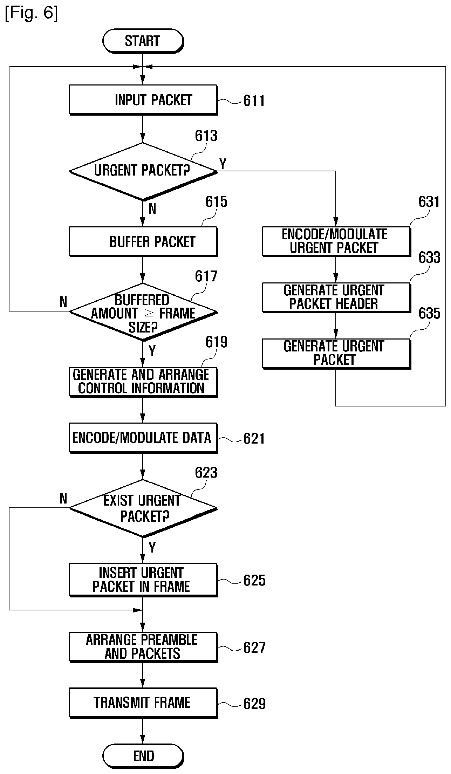

FIG. 6 is a flowchart illustrating a method for generating a transmission frame of a digital broadcast transmitter according to an embodiment of the present invention; and

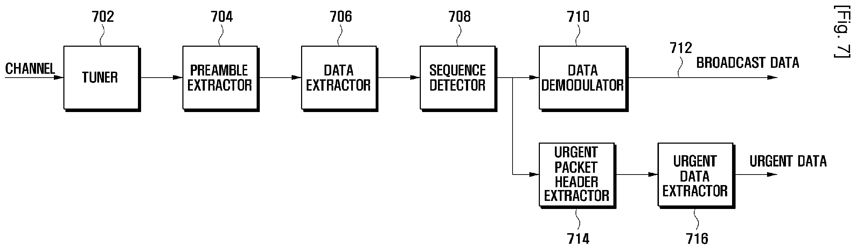

FIG. 7 is a block diagram illustrating a configuration of a digital broadcast receiver for supporting an urgent packet transmission in a broadcast system according to an embodiment of the present invention.

Embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

In a broadcast system according to an embodiment of the present invention, when an urgent packet is generated during the transmission of packet data, the urgent packet is inserted into the data to be transmitted in the current frame. The urgent packet can be a packet carrying the data of delay-constrained service such as an emergency broadcast service or a real time service. The real time service includes a game service which does not tolerate a request delay.

In the case of a normal broadcast system using a fixed-size frame for broadcast data transmission, the transmission data is buffered to form a frame and then scheduled in the next frame, thereby causing transmission delay at least as long as a frame length. In an embodiment of the present invention, a method for effectively inserting an urgent packet into a current frame and an urgent packet header structured for supporting the urgent packet transmission are provided for the broadcast system using a fixed-length frame.

FIG. 3 is a diagram illustrating a frame structure for use in an urgent packet transmission method according to an embodiment of the present invention. In the embodiment of FIG. 3, the frame is depicted with a single PLP for the simplicity of explanation.

Referring to FIG. 3, a frame 301 includes a preamble symbol 310 and a plurality of coded normal broadcast packets 311 to 314 that are scheduled and transmitted in sequential order. If an urgent packet is generated while transmitting the first packet 311, the transmitter generates an urgent packet data 321 with an urgent packet header 320 containing an identifier, and substitutes the urgent packet for the next packet 312 by puncturing the next packet 312 and inserting the urgent packet header 320 and the urgent packet data 321 into the punctured space. As a consequence, the frame 301 is modified as denoted by reference numeral 302.

FIG. 3 shows a case where the urgent packet is substituted for a broadcast packet. In this case, the broadcast packet substituted by the urgent packet is not transmitted. In another embodiment of the present invention, the urgent packet can be inserted between two broadcast packets rather than substituting for the next packet. In this case, the frame structure is modified such that the broadcast packets are shifted by the insertion of the urgent packet. The following description is directed to the case where the urgent packet is substituted for a specific broadcast packet (e.g. a current packet in the frame being formed when the urgent packet is generated or a packet at a predetermined position in the frame).

The urgent packet is substituted for a specific packet of currently generated frame as shown in FIG. 3. In FIG. 3, the broadcast packet formed when the urgent packet is generated is replaced by the urgent packet. Also, the urgent packet can be substituted for a specific broadcast packet after the frame is completely formed. That is, after the frame is completely formed with N broadcast data packets, one of the N broadcast data packets can be replaced by the urgent packet.

The urgent packet includes an urgent packet header 320 and an urgent packet data 321 as shown in FIG. 3. Table 1 shows control information contained in the urgent packet header 320 according to an embodiment of the present invention.

**Table 1**

| | | | |
|---|---|---|---|
| FEC_Header | Start of FEC Frame | 8 | bits |
| | Modulation | 3 | bits |
| | Code Rate | 5 | bits |
| | Input Stream ID | 8 | bits |
| | Parity | 30 | bits |
| | Total | 54 | bits |

Referring to Table 1, the urgent packet header includes an 8-bit start of FEC_frame field for indicating a start point of the urgent packet, a 3-bit modulation field, a 5-bit code rate field, an 8-bit input stream ID field for the receiver to receive the urgent packet thereon (e.g. the input stream IDentifier (ID) can be an identifier for identifying the receiver to which the urgent packet is destined), and a 30-bit parity field for coding the urgent packet header. The lengths and names of the information fields constituting the urgent packet header can be changed depending on the system implementation.

FIG. 4 is a block diagram illustrating a configuration of a digital broadcast transmitter for supporting an urgent packet transmission in a broadcast system according to an embodiment of the present invention.

As shown in FIG. 4 the digital broadcast transmitter includes a controller 400, a buffer 402, a scheduler 404, a data encoder/modulator 406, a control information generator 408, an urgent packet encoder/modulator 410, a header inserter, and a frame generator 414. The buffer 402 buffers input packets under the control of the controller 400. The controller 400 analyzes the input packets and controls the buffer 402 to buffer the data packets and, if an urgent packet is detected, output the urgent packet to the urgent packet encoder/modulator 410. The controller 400 also controls such that, when the amount of the buffered packets reaches a frame size, the buffer 402 outputs the buffered packets to the scheduler 404. The scheduler 404 performs scheduling on the data packets in units of a frame. The control information generator 408 generates control information containing the scheduling and signaling information and outputs the control information in the form of a preamble. The data encoder/modulator 406 performs coding and modulation on the data packets in units of a frame and outputs a modulated frame.

The urgent packet encoder/modulator 410 performs coding and modulation on the urgent packet and outputs the modulated urgent packet to the header inserter 412. The header inserter 412 generates an urgent packet header containing urgent packet indication information, a receiver identifier, and coding information. The urgent packet encoder/modulator 410 and the header inserter 412 can be implemented as one unit (e.g. an urgent packet generator). The frame generator 414 multiplexes the data packets output by encoder/modulator 406, the preamble output by the control information generator 408, and the urgent packet (if any) with the urgent packet header into a frame under the control of the controller 400. In the case where there exists an urgent packet to be transmitted, the controller 400 controls the frame generator 414 to insert the urgent packet including the urgent packet data and header.

As aforementioned, the controller 400 analyzes the packet data input from the buffer 402 and controls, if an urgent packet is detected, the buffer 402 to output the urgent packet to the urgent packet encoder/modulator 410 and output, if the amount of the buffered data packets reaches a frame size, the buffered data packets to the data encoder/modulator 406. In the case where there exists an urgent packet to be transmitted, the controller 400 controls the frame generator 414 to insert the urgent packet output by the header inserter 412 into the frame.

In FIG. 4, the controller 400 detects an urgent packet by analyzing the packet data input to the buffer 402. However, the controller can be configured to receive the urgent packet directly. That is, the urgent packet data can be generated by a separate message generator such that the controller 400 controls the creation of the frame along with the urgent packet data generated by the message generator. In this case, the controller 400 sends the urgent packet data output by the message generator to the urgent packet encoder/modulator 410 and controls the frame generator 414 to insert the urgent packet generated through the urgent packet encoder/modulator 410 and the header inserter 412 into the frame.

In the above structured digital broadcast transmitter for a digital broadcast system, if packets are input, the input packets are buffered in the buffer 402 and then output to the scheduler in units of a frame. The buffer 402 can be implemented in the structure as depicted in FIG. 3 such that the packet data buffered in a buffer are output to the scheduler 404 while the another buffer is buffering the input packets under the control of the controller 400. The packet data scheduled by the scheduler 404 are encoded and modulated by the data encoder/decoder 406 and then multiplexed into a frame by the frame generator 414. The control information containing the scheduling information and other signaling information of the frame are generated by the control information generator 408 and mapped to a preamble by the frame generator 414.

The controller 400 analyzes the input packets buffered in the buffer 402 and, if an urgent packet is detected, controls the buffer 402 to output the urgent packet to the urgent packet generator, composed of the urgent packet encoder/modulator 410 and the header inserter 412. That is, when an input packet is classified into an urgent packet, the urgent packet is immediately encoded and modulated by the urgent packet encoder/modulator 410 without being scheduled by the scheduler 404. In the case where an urgent packet message is received from a separate urgent message generator (not shown), the controller 400 sends the urgent packet message to the urgent packet encoder/modulator 410. Next, the header inserter 412 generates an urgent packet header containing the information listed in Table 1 including an urgent packet and inserts the urgent packet header in front of the urgent packet. The controller 400 controls the frame generator 414 to generate the frame with the urgent packet substituted for the normal data packet positioned at the current packet location. That is, the frame generator 414 generates the frame containing the normal data packet and preamble and, if an urgent packet to be transmitted exists, substitutes the urgent packet for a normal data packet positioned at the current packet location or a specific packet location within the frame under the control of the controller 400.

FIG. 5 is a block diagram illustrating a configuration of the frame generator of FIG. 4.

Referring to FIG. 5, the frame generator includes a preamble generator 502, a data symbol generator 504, an urgent packet inserter 506, and a transmission frame determiner 508.

The preamble generator 502 is responsible for mapping the control information generated by the control information generator 408 of FIG. 4 to a preamble of the data frame. The data symbol generator 504 is responsible for generating a data symbol with the output signal of the data encoder/modulator 406. The urgent packet inserter 506 is responsible for inserting, when there exists an urgent packet to be transmitted, the urgent packet at a position predetermined in the frame under the control of the controller 400. The transmission frame determiner 508 generates a transmission frame by inserting the preamble output by the preamble generator 502.

In the above structured frame generator 414, the data symbol generator 504 performs scheduling by multiplexing the data packets output by the data encoder/modulator 406 of FIG. 4. Next, the controller 400 checks whether an urgent packet is input. If an urgent packet is input, the controller 400 controls the urgent packet inserter 506 and substitutes the urgent packet for a data packet positioned at a predetermined packet duration on the channel corresponding to the frame. The urgent packet can substitute for the data packet positioned at a predetermined packet location within the frame or inserted in front of the data packet. If there is no urgent packet detected, the control unit 400 does not perform specific control on the urgent packet inserter 506 such that only the data packets output by the data symbol generator 504 are input to the transmission frame determiner 508. The control information of the frame generated by the control information generator 408 of FIG. 4 is processed by the preamble generator 502 so as to be output in the form of a preamble. The preamble and data packets generated in this manner are scheduled into the transmission frame. Since the operations following the transmission frame generation are identical with those of other OFDM-based systems, a detailed description about those operations are omitted.

FIG. 6 is a flowchart illustrating a method for generating a transmission frame of a digital broadcast transmitter according to an embodiment of the present invention. The digital broadcast transmitter analyzes input packets to detect an occurrence of an urgent packet and generates a transmission frame depending on the result.

Referring to FIG. 6, the digital broadcast transmitter receives a series of input packets carrying broadcast data in step 611 and inspects the input packets to detect an urgent packet in step 613. As aforementioned, the urgent packet is a packet carrying delay-constrained broadcast data such as disaster broadcast service data and emergency broadcast service data. In a game broadcast, the urgent packet can be packet data for immediately processing the user input. If an urgent packet is detected at step 613, the digital broadcast transmitter immediately performs encoding and modulation on the urgent packet in step 631 and generates an urgent packet header in step 633. The urgent packet header includes the information on the start of FEC_Frame, modulation and coding, input stream ID, and parity information as shown in Table 1. Next, the digital broadcast transmitter inserts the urgent packet header in front of the modulated emergency packet to output emergency packet data. These steps are performed when an urgent packet is detected.

If no urgent packet is detected at step 613, the digital broadcast transmitter buffers the input packets in a buffer in step 615 and buffering continues until the buffered normal broadcast data amount reaches a frame size. The digital broadcast transmitter determines whether the currently buffered data amount is greater than or equal to the frame size in step 617. If the currently buffered data amount is greater than or equal to the frame size, the digital broadcast transmitter generates control information containing scheduling information and signaling information of the frame in step 619. Next, the digital broadcast transmitter performs encoding and modulation on the buffered broadcast packet data in step 621.

Next, the digital broadcast transmitter determines whether an urgent packet exists in step 623. If an urgent packet exists, the digital broadcast transmitter inserts the urgent packet at a position of a specific broadcast packet in the frame in step 625. The position can be of a broadcast frame having the input stream ID of the receiver to which the urgent packet is destined. With the frame structure as shown in FIG. 1, the urgent packet can be transmitted to a specific receiver or to all of the receivers. That is, the urgent packet can be inserted into a position of one or all of the channels multiplexed in the frame. If the urgent packet is inserted, the broadcast packet data that occupied the corresponding position is removed. In the case where a number of urgent packets is two or more, the digital broadcast transmitter can insert the urgent packets in sequential order from the predetermined position by substituting for the broadcast packets occupying the corresponding positions.

After inserting the urgent packet or in the case when no urgent packet exists, the digital broadcast transmitter generates a preamble with the control information and inserts the preamble in front of the frame such that the encoded and modulated broadcast data follows the preamble as shown in FIG. 1 in step 627. The digital broadcast transmitter transmits the broadcast frame structured in this manner in step 629.

As aforementioned, the digital broadcast digital broadcast transmitter determines whether the input broadcast data packet is a normal broadcast packet or an urgent packet and buffers the normal packet in a buffer. When the amount of the buffered packets reaches the frame size, the digital broadcast transmitter forms a broadcast frame with the buffered packets. At this time, the digital broadcast transmitter generates the control information and arranges the control information at the beginning of the frame in the form of a preamble and then the encoded and modulated data packets to follow the preamble as shown in FIG. 1. If an urgent packet is detected, the digital broadcast transmitter immediately performs encoding and modulation on the urgent packet data other than buffering the urgent packet, generates an urgent packet header, and inserts the urgent packet header in front of the modulated urgent packet data. Next, the digital broadcast transmitter inserts the urgent packet into a position occupied by one of the normal broadcast packets in the frame. After the packet scheduling is completed in the frame, the digital broadcast transmitter transmits the frame.

FIG. 7 is a block diagram illustrating a configuration of a digital broadcast receiver for supporting an urgent packet transmission in a broadcast system according to an embodiment of the present invention.

As shown in FIG. 7, the digital broadcast receiver includes a tuner 702, a preamble extractor 704, a data extractor 706, a sequence detector 708, a data demodulator 710, an urgent packet header extractor 714, and an urgent data extractor 716.

The tuner 702 receives broadcast packets on a selected channel from the broadcast frame structured as shown in FIG. 1. The preamble extractor 704 detects the preamble of the broadcast frame and extracts the control information from the preamble. The data extractor 706 extracts the broadcast data (here, the broadcast data can be a PLP) from the broadcast packets. The sequence detector 708 checks the broadcast packets output by the data extractor 706 to extract an urgent packet. The data demodulator 710 demodulates the normal broadcast packets to output the broadcast packet data. The urgent packet header extractor 714 extracts the urgent packet header of the urgent packet detected by the sequence detector 708. The urgent data extractor 716 extracts the urgent packets based on the header information of the urgent packet and processes (demodulates and decodes) the urgent packets. The normal broadcast packet data and the urgent packet data processed by the data demodulator 710 and the urgent data extractor 716 are delivered to the upper layer signal processor (not shown) to be output for the user.

In the above structured digital broadcast receiver, the tuner 702 receives a broadcast signal on a tuned channel to receive a specific broadcast data, and the preamble extractor 704 extracts the preamble from the received broadcast signal to detect a start point of a frame. The data extractor 706 extracts the data using the control information extracted from the preamble after frame synchronization. Since the urgent packet header inserted with the urgent packet data between the normal broadcast packets has a known sequence, the sequence detector 708 can determine whether each packet output by the data extractor 706 is a normal packet or an urgent packet with reference to the known sequence (in the case of Table 1, if the start of FEC_frame information is detected at the beginning of a packet, the corresponding packet is detected as the urgent packet). The normal broadcast packet is output to the demodulator 710, and the urgent packet is output to the urgent packet header extractor 714. The urgent packet header extractor 714 demodulates the urgent packet header to extract the control information on the urgent packet. The urgent data extractor 716 extracts the data carried by the urgent packet based on the control information of the urgent packet.

As described above, the urgent packet transmission/reception apparatus and method for a digital broadcast system according to the present invention is advantageous in that it can immediately deliver the urgent packet carrying the delay-constrained data such as disaster broadcast data and emergency broadcast data.

## Claims

1. A packet transmission apparatus of a digital broadcast transmitter, for delivering and processing an urgent packet in a digital broadcast system, the broadcast system being a system for transmitting broadcast data in frames of fixed size, the urgent packet being a packet carrying the data of a delay constrained service and an urgent packet header, each of the frames (301) including a preamble (310) and a plurality of packets (311-314), comprising:
a buffer (402) for buffering input packets carrying data other than the data of the delay constrained service, wherein the input packets are accumulated until reaching a length of a single frame, and outputting buffered packets to a scheduler (404);
the scheduler (404)_for outputting scheduled packets;
a data encoder/modulator (406) for encoding and modulating the scheduled packets and outputting the encoded and modulated packets to a frame generator (414);
a control information generator (408) for generating control information containing scheduling and signalling information and outputting the control information in the form of a preamble to the frame generator;
an urgent packet generator for encoding and modulating urgent packet data and generating an urgent packet header for the urgent packet data thereby outputting an encoded and modulated urgent packet; and
a frame generator (414) for inserting the urgent packet at a predetermined position in the frame and multiplexing the encoded and modulated packets, the encoded and modulated urgent packet with the urgent packet header, and the preamble at the frame generator, for outputting a broadcast frame.

2. The packet transmission apparatus of claim 1, wherein the urgent packet generator comprises:
an urgent packet encoder/modulator (410) for encoding and modulating the urgent packet; and
a header inserter (412) for generating the urgent packet header and inserting the urgent packet header in front of the urgent packet.

3. The packet transmission apparatus of claim 1, wherein the frame generator (414) comprises:
a preamble generator (502) for generating the preamble containing the control information;
a data symbol generator (504) for generating data symbols with the output signal of the data encoder/modulator (406);
an urgent packet inserter (506) for inserting the urgent packet at the position within the data symbols output by the data symbol generator; and
a transmission frame determiner (508) for generating a transmission frame by inserting the preamble output by the preamble generator (502).

4. The packet transmission apparatus of claim 3, wherein the length of the packet is equal to a unit of a Forward Error Correction, FEC.

5. A system comprising the packet transmission apparatus of claim 1, the system further comprising:
a receiver for receiving the broadcast frame transmitted by the transmitter, discriminating the urgent packet from the broadcast packets, and processing the broadcast packets and the urgent packet.

6. The digital broadcast system of claim 5, wherein the receiver is configured to receive data on a selected broadcast channel and comprises:
a sequence detector (708) for detecting a header sequence of the urgent packet in the broadcast frame;
an urgent packet header extractor (714) for extracting the urgent packet header based on the header sequence;
an urgent packet extractor (716) for processing urgent data carried by the urgent packet based on the urgent packet header; and
a data demodulator (710) for processing the broadcast data except for the urgent data.

7. A method for delivering and processing an urgent packet in a digital broadcast system, the broadcast system being a system for transmitting broadcast data in frames of fixed size, the urgent packet being a packet carrying the data of a delay constrained service and an urgent packet header, each of the frames (301) including a preamble (310) and a plurality of packets (311-314), the method comprising:
buffering (615) input packets carrying data other than the data of the delay constrained service, wherein the input packets are accumulated until reaching a length of a single frame;
outputting buffered packets to a scheduler (404);
outputting scheduled packets from the scheduler (404);
encoding and modulating at a data encoder/modulator (406) the scheduled packets and outputting the encoded and modulated packets to a frame generator (414);
generating (502) at a control information generator (408) control information containing scheduling and signalling information and outputting the control information in the form of a preamble to the frame generator;
encoding and modulating urgent packet data at an urgent packet encoder/modulator (410);
generating an urgent packet header for the urgent packet data thereby outputting an encoded and modulated urgent packet;
inserting the urgent packet at a predetermined position in the frame;
multiplexing the encoded and modulated packets, the encoded and modulated urgent packet with the urgent packet header, and the preamble at the frame generator, for outputting a broadcast frame; and
transmitting (629) the broadcast frame.

8. The method of claim 7, wherein the predetermined position is a position within data symbols in the frame (625).

9. The method of claim 7, wherein the steps defined in claim 7 are performed at a transmitter, the method further comprising:
processing, at a receiver, the broadcast packets and the at least one urgent packet separately extracted from the broadcast frame by detecting the urgent packet header within broadcast frame.

10. The packet communication method of claim 9, wherein processing the broadcast packets and the at least one urgent packet comprises:
receiving (702) the broadcast frame on a selected channel;
detecting (708) a header sequence of the urgent packet within the broadcast frame;
processing urgent data (714; 716) carried by the urgent packet based on the header detected with reference to the header sequence; and
processing broadcast data (710; 712) carried by the broadcast packets except for the urgent data.

## Patentansprüche

1. Paketübertragungsvorrichtung eines digitalen Rundfunksenders zum Liefern und Verarbeiten eines zeitkritischen Pakets in einem digitalen Rundfunksystem, wobei das Rundfunksystem ein System zum Übertragen von Rundfunkdaten in Rahmen von fester Größe ist, wobei das zeitkritische Paket ein Paket ist, das die Daten eines verzögerungsbeschränkten Dienstes und einen zeitkritischen Paket-Header trägt, wobei jeder der Rahmen (301) eine Präambel (310) und eine Mehrzahl von Paketen (311-314) aufweist, umfassend:
einen Puffer (402) zum Puffern von Eingabepaketen, die andere Daten als die Daten des verzögerungsbeschränkten Dienstes, wobei
die Eingabepakete akkumuliert werden, bis sie eine Länge eines einzelnen Rahmens erreichen, und
Ausgeben von gepufferten Paketen an einen Scheduler (404) ;
wobei der Scheduler (404)zum Ausgeben von geplanten Paketen dient;
einen Datencodierer/-modulator (406) zum Codieren und Modulieren der geplanten Pakete und zum Ausgeben der codierten und modulierten Pakete an einen Rahmengenerator (414);
einen Steuerinformationsgenerator (408) zum Erzeugen von Steuerinformationen, die Planungs- und Signalisierungsinformationen enthalten, und zum Ausgeben der Steuerinformationen in Form einer Präambel an den Rahmengenerator;
einen zeitkritischen Paketgenerator zum Codieren und Modulieren zeitkritischer Paketdaten und zum Erzeugen eines zeitkritischen Paket-Headers für die zeitkritischen Paketdaten, um dadurch ein codiertes und moduliertes zeitkritisches Paket auszugeben; und
einen Rahmengenerator (414) zum Einfügen des zeitkritischen Pakets an einer vorbestimmten Position in dem Rahmen und zum Multiplexen der codierten und modulierten Pakete, des codierten und modulierten zeitkritischen Pakets mit dem zeitkritischen Paket-Header und der Präambel am Rahmengenerator zum Ausgeben eines Rundfunkrahmens.

2. Paketübertragungsvorrichtung nach Anspruch 1, wobei der zeitkritische Paketgenerator ferner Folgendes umfasst: einen zeitkritischen Paketcodierer/-modulator (410) zum Codieren und Modulieren des zeitkritischen Pakets; und einen Header-Inserter (412) zum Erzeugen des zeitkritischen Paket-Headers und Einfügen des zeitkritischen Paket-Headers vor dem zeitkritischen Paket.

3. Paketübertragungsvorrichtung nach Anspruch 1, wobei der Rahmengenerator (414) Folgendes umfasst:
einen Präambelgenerator (502) zum Erzeugen der Präambel, welche die Steuerinformationen enthält;
einen Datensymbolgenerator (504) zum Erzeugen von Datensymbolen mit dem Ausgangssignal des Datencodierers/-modulators (406);
einen zeitkritischen Paket-Inserter (506) zum Einfügen des zeitkritischen Pakets an der Position innerhalb der Datensymbole, die von dem Datensymbolgenerator ausgegeben werden; und
einen Übertragungsrahmenbestimmer (508) zum Erzeugen eines Übertragungsrahmens durch Einfügen der Präambelausgabe durch den Präambelgenerator (502).

4. Paketübertragungsvorrichtung nach Anspruch 3, wobei die Länge des Pakets gleich einer Einheit einer Vorwärtsfehlerkorrektur, Forward Error Correction - FEC, ist.

5. System, umfassend die Paketübertragungsvorrichtung nach Anspruch 1, wobei das System ferner Folgendes umfasst: einen Empfänger zum Empfangen des von dem Sender übertragenen Rundfunkrahmens, Unterscheiden des zeitkritischen Pakets von den Rundfunkpaketen und Verarbeiten der Rundfunkpakete und des zeitkritischen Pakets.

6. Digitales Rundfunksystem nach Anspruch 5, wobei der Empfänger konfiguriert ist, Daten auf einem ausgewählten Rundfunkkanal zu empfangen, und Folgendes umfasst:
einen Sequenzdetektor (708) zum Detektieren einer Header-Sequenz des zeitkritischen Pakets in dem Rundfunkrahmen;
ein Extrahierer (714) für den zeitkritischen Paket-Header zum Extrahieren des zeitkritischen Paket-Headers basierend auf der Header-Sequenz;
einen Extrahierer (716) für das zeitkritische Paket zum Verarbeiten von zeitkritischen Daten, die von dem zeitkritischen Paket getragen werden, basierend auf dem zeitkritischen Paket-Header; und
einen Datendemodulator (710) zum Verarbeiten der Rundfunkdaten mit Ausnahme der zeitkritischen Daten.

7. Verfahren zum Liefern und Verarbeiten eines zeitkritischen Pakets in einem digitalen Rundfunksystem, wobei das Rundfunksystem ein System zum Übertragen von Rundfunkdaten in Rahmen von fester Größe ist, wobei das zeitkritische Paket ein Paket ist, das die Daten eines verzögerungsbeschränkten Dienstes und einen zeitkritischen Paket-Headers trägt, wobei jeder der Rahmen (301) eine Präambel (310) und eine Mehrzahl von Paketen (311-314) aufweist, wobei das Verfahren Folgendes umfasst:
Puffern (615) von Eingangspaketen, die andere Daten als die Daten des verzögerungsbeschränkten Dienstes, wobei die Eingangspakete akkumuliert werden, bis sie eine Länge eines einzelnen Rahmens erreichen;
Ausgeben von gepufferten Paketen an einen Scheduler (404) ;
Ausgeben von geplanten Paketen von dem Scheduler (404); Codieren und Modulieren an einem Datencodierer/- modulator (406) der geplanten Pakete und Ausgeben der codierten und modulierten Pakete an einen Rahmengenerator (414);
Erzeugen (502) an einem Steuerinformationsgenerator (408) von Steuerinformationen, die Planungs- und Signalisierungsinformationen enthalten, und Ausgeben der Steuerinformationen in Form einer Präambel an den Rahmengenerator;
Codieren und Modulieren von zeitkritischen Paketdaten bei einem zeitkritischen Paketcodierer/-modulator (410) ;
Erzeugen eines zeitkritischen Paket-Headers für die zeitkritischen Paketdaten, um dadurch ein codiertes und moduliertes zeitkritisches Paket auszugeben;
Einfügen des zeitkritischen Pakets an einer vorbestimmten Position in dem Rahmen;
Multiplexen der codierten und modulierten Pakete, des codierten und modulierten zeitkritischen Pakets mit dem zeitkritischen Paket-Header und der Präambel am Rahmengenerator zum Ausgeben eines Rundfunkrahmens; und Übertragen (629) des Rundfunkrahmens.

8. Verfahren nach Anspruch 7, wobei die vorbestimmte Position eine Position innerhalb von Datensymbolen in dem Rahmen (625) ist.

9. Verfahren nach Anspruch 7, wobei die in Anspruch 7 definierten Schritte an einem Sender durchgeführt werden, wobei das Verfahren ferner Folgendes umfasst: Verarbeiten, an einem Empfänger, der Rundfunkpakete und des mindestens einen zeitkritischen Pakets, das getrennt von dem Rundfunkrahmen extrahiert wurde, durch Erkennen des zeitkritischen Paket-Headers innerhalb des Rundfunkrahmens.

10. Paketübermittlungsverfahren nach Anspruch 9, wobei das Verarbeiten der Rundfunkpakete und des mindestens einen zeitkritischen Pakets Folgendes umfasst:
Empfangen (702) des Rundfunkrahmens auf einem ausgewählten Kanal;
Erkennen (708) einer Header-Sequenz des zeitkritischen Pakets in dem Rundfunkrahmen;
Verarbeiten von zeitkritischen Daten (714; 716), die von dem zeitkritischen Paket getragen werden, basierend auf dem Header, der in Bezug auf die Header-Sequenz erkannt wird; und
Verarbeiten von Rundfunkdaten (710; 712), die von den Rundfunkpaketen mit Ausnahme der zeitkritischen Daten getragen werden.

## Revendications

1. Appareil de transmission de paquets d'un émetteur de diffusion numérique, pour livrer et traiter un paquet urgent dans un système de diffusion numérique, le système de diffusion étant un système destiné à transmettre des données de diffusion dans des trames de taille fixe, le paquet urgent étant un paquet portant les données d'un service à retard limité et un en-tête de paquet urgent, chacune des trames (301) comprenant un préambule (310) et une pluralité de paquets (311-314), comprenant :
une mémoire tampon (402) pour mettre en mémoire tampon des paquets d'entrée portant des données autres que lesdites données dudit service à retard limité, dans lequel les paquets d'entrée sont cumulés jusqu'à atteindre une longueur d'une trame unique, et pour délivrer des paquets mis en mémoire tampon à un programmateur (404);
le programmateur (404) pour délivrer des paquets programmés ;
un codeur/modulateur de données (406) pour coder et moduler les paquets programmés et pour délivrer les paquets codés et modulés à un générateur de trame (414) ;
un générateur d'informations de commande (408) pour générer des informations de commande contenant des informations de programmation et de signalisation et pour délivrer les informations de commande sous la forme d'un préambule au générateur de trame ;
un générateur de paquet urgent pour coder et moduler des données de paquet urgent et pour générer un en-tête de paquet urgent pour les données de paquet urgent en délivrant de ce fait un paquet urgent codé et modulé ; et
un générateur de trame (414) pour insérer le paquet urgent à une position prédéterminée dans la trame et pour multiplexer les paquets codés et modulés, le paquet urgent codé et modulé avec l'en-tête de paquet urgent, et le préambule au générateur de trame, afin de délivrer une trame de diffusion.

2. Appareil de transmission de paquets selon la revendication 1, dans lequel le générateur de paquet urgent comprend :
un codeur/modulateur de paquet urgent (410) pour coder et moduler le paquet urgent ; et
un dispositif d'insertion d'en-tête (412) pour générer l'en-tête de paquet urgent et pour insérer l'en-tête de paquet urgent devant le paquet urgent.

3. Appareil de transmission de paquets selon la revendication 1, dans lequel le générateur de trame (414) comprend :
un générateur de préambule (502) pour générer le préambule contenant les informations de commande ;
un générateur de symboles de données (504) pour générer des symboles de données avec le signal de sortie du codeur/modulateur de données (406) ;
un dispositif d'insertion de paquet urgent (506) pour insérer le paquet urgent à la position à l'intérieur des symboles de données délivrés par le générateur de symboles de données ; et
un déterminateur de trame de transmission (508) pour générer une trame de transmission par l'insertion du préambule délivré par le générateur de préambule (502).

4. Appareil de transmission de paquets selon la revendication 3, dans lequel la longueur du paquet est égale à une unité d'une correction d'erreur sans voie de retour, FEC.

5. Système comprenant l'appareil de transmission de paquets selon la revendication 1, le système comprenant en outre :
un récepteur pour recevoir la trame de diffusion transmise par l'émetteur, discriminer le paquet urgent des paquets de diffusion, et traiter les paquets de diffusion et le paquet urgent.

6. Système de diffusion numérique selon la revendication 5, dans lequel le récepteur est configuré pour recevoir des données sur un canal de diffusion sélectionné et comprend :
un détecteur de séquence (708) pour détecter une séquence d'en-tête du paquet urgent dans la trame de diffusion ;
un extracteur d'en-tête de paquet urgent (714) pour extraire l'en-tête de paquet urgent sur la base de la séquence d'en-tête ;
un extracteur de paquet urgent (716) pour traiter des données urgentes portées par le paquet urgent sur la base de l'en-tête de paquet urgent ; et
un démodulateur de données (710) pour traiter les données de diffusion à l'exception des données urgentes.

7. Procédé pour livrer et traiter un paquet urgent dans un système de diffusion numérique, le système de diffusion étant un système destiné à transmettre des données de diffusion dans des trames de taille fixe, le paquet urgent étant un paquet portant les données d'un service à retard limité et un en-tête de paquet urgent, chacune des trames (301) comprenant un préambule (310) et une pluralité de paquets (311-314), le procédé comprenant :
la mise en mémoire tampon (615) de paquets d'entrée portant des données autres que lesdites données dudit service à retard limité, dans lequel les paquets d'entrée sont cumulés jusqu'à atteindre une longueur d'une trame unique,
la délivrance des paquets mis en mémoire tampon à un programmateur (404) ;
la délivrance des paquets programmés au programmateur (404) ;
le codage et la modulation, à un codeur/modulateur de données (406), des paquets programmés et la délivrance des paquets codés et modulés à un générateur de trame (414) ;
la génération (502), à un générateur d'informations de commande (408), d'informations de commande contenant des informations de programmation et de signalisation et la délivrance des informations de commande sous la forme d'un préambule au générateur de trame ;
le codage et la modulation de données de paquet urgent à un codeur/modulateur de paquet urgent (410) ;
la génération d'un en-tête de paquet urgent pour les données de paquet urgent en délivrant de ce fait un paquet urgent codé et modulé ;
l'insertion du paquet urgent à une position prédéterminée dans la trame ;
le multiplexage des paquets codés et modulés, du paquet urgent codé et modulé avec l'en-tête de paquet urgent, et du préambule au générateur de trame, pour délivrer une trame de diffusion ; et
la transmission (629) de la trame de diffusion.

8. Procédé selon la revendication 7, dans lequel la position prédéterminée est une position à l'intérieur de symboles de données dans la trame (625).

9. Procédé selon la revendication 7, dans lequel les étapes de la revendication 7 sont effectuées à un émetteur, le procédé comprenant en outre :
le traitement, à un récepteur, des paquets de diffusion et de l'au moins un paquet urgent extraits séparément de la trame de diffusion par la détection de l'en-tête de paquet urgent à l'intérieur d'une trame de diffusion.

10. Procédé de communication de paquets selon la revendication 9, dans lequel le traitement des paquets de diffusion et de l'au moins un paquet urgent comprend :
la réception (702) de la trame de diffusion sur un canal sélectionné ;
la détection (708) d'une séquence d'en-tête du paquet urgent à l'intérieur de la trame de diffusion ;
le traitement de données urgentes (714 ; 716) portées par le paquet urgent sur la base de l'en-tête détecté en référence à la séquence d'en-tête ; et
le traitement de données de diffusion (710 ; 712) portées par les paquets de diffusion à l'exception des données urgentes.
